# EUROPÄISCHE PATENTANMELDUNG

(11) **EP 0 786 435 A2**
(43) Veröffentlichungstag der Anmeldung: **30.07.1997**
(21) Anmeldenummer: 97100506.1
(22) Anmeldetag: 15.01.1997
(51) Int. Cl.: C02F 3/30, C02F 3/12

(54) **Verfahren zur Behandlung von Abwasser sowie Vorrichtung zur Durchführung des Verfahrens**

(30) Priorität: 24.01.1996 DE 19602385
(71) Anmelder: Dyckerhoff & Widmann Aktiengesellschaft, D-81902 München (DE)
(72) Erfinder:
(74) Vertreter: Patentanwälte Möll und Bitterich

(57) **Zusammenfassung**

Die Erfindung betrifft ein Verfahren zur Behandlung von Abwasser im Wege der sequentiellen biologischen Reinigung in einem Reaktionsbehälter (1), bei dem in der Belüftungsphase über ein Belüftungssystem (6) Luft aus der Atmosphäre in das Abwasser eingeblasen und danach der Behälter (1) luftdicht verschlossen und in der darauffolgenden Mischphase die im Reaktionsbehälter (1) eingeschlossene Luft zur Durchmischung des Abwassers unter anaeroben Bedingungen in einem geschlossenen Kreislauf geführt wird. Nach kurzer Zeit wird der in der Luft befindliche Sauerstoff durch Mikroorganismen veratmet; übrig bleibt ein inertes Gas. Auf diese Weise ist es möglich, sowohl für Belüftungsphase, als auch Mischphase die gleiche gerätemäßigen Ausstattung zu benutzen, wodurch die Wirtschaftlichkeit des erfindungsgemäßen Verfahrens gegenüber bekannten deutlich gesteigert wird.

## Beschreibung

Die Erfindung betrifft ein Verfahren zur Behandlung von Abwasser im Wege der sequentiellen biologischen Reinigung sowie eine Vorrichtung zur Durchführung des Verfahrens.

Die Klärung von Abwasser erfolgt heutzutage in verschiedenen Stufen. Dabei ist es bekannt, das Abwasser nach einer mechanischen Vorklärung einer biologischen Reinigung zu unterziehen. In dieser werden organische Substanzen unter aeroben Bedingungen mit Hilfe von Mikroorganismen in Wasser und Kohlenstoff umgesetzt. In dem so gereinigten Wasser verbleiben aber noch beträchtliche Mengen an Stickstoff und Phosphor, was einerseits zur Eutrophierung der Vorfluter und in der Folge zu Sauerstoffmangel führt, andererseits aber auch den Betrieb einer Kläranlage zum Beispiel durch Schwimmschlammbildung in der Nachklärung beeinträchtigen kann.

Deshalb legt man in jüngster Zeit zunehmend Wert darauf, außer kohlenstoffhaltigen Substanzen in einer weitergehenden Reinigungsstufe auch Stickstoffverbindungen aus dem Abwasser zu entfernen. Dieser Vorgang erfolgt zweistufig. In einer ersten aeroben Stufe, die parallel mit dem Abbau organischer Substanzen stattfinden kann, werden durch autotrophe Mikroorganismen, den Nitrifikanten, Ammoniumverbindungen zu Nitrit und schließlich zu Nitrat oxidiert. In einer zweiten anaeroben Behandlungsstufe wird dann mit Hilfe von Denitrifikanten Nitrat in Stickstoff, Kohlenstoff und Wasser umgewandelt. Infolge Mangels an gelöstem Sauerstoff dient dabei das Nitrat als Sauerstoffquelle für den Umsetzungsprozeß. Für die Elimination von Stickstoff aus dem Abwasser ist also der Wechsel von aeroben und anaeroben Verhältnissen Voraussetzung. Während beider Behandlungsstufen ist eine gute Durchmischung des Abwassers erforderlich.

In diesem Zusammenhang ist das sogenannte SBR ("Sequencing-Batch-Reactor")-Verfahren bekannt (EP 0 481 963 A1). Dieses Verfahren zeichnet sich dadurch aus, daß die einzelnen Verfahrensschritte, also die Stufen der biologischen Reinigung sowie die Nachklärung nacheinander in demselben Behälter ablaufen, also nicht räumlich voneinander getrennt sind. Das Prinzip des SBR-Verfahrens ist die zeitliche Aufeinanderfolge ("Sequence") folgender Prozeßphasen:
1. Füllen des Reaktors mit Abwasser;
2. Belüften und Mischen des Abwassers zum Beispiel durch Rühren;
3. Absetzen der Schlammflocken;
4. Abziehen von gereinigtem Wasser und überschußschlamm;
5. Warten auf eine neue Füllung.

Für das SBR-Verfahren ist die Aufrechterhaltung eines leistungsfähigen Bestandes an Mikroorganismen unerläßlich. Dies wird durch ein vielseitiges Angebot an organischen und anorganischen Bestandteilen erreicht, wie es in kommunalem Abwasser üblicherweise gegeben ist. Zur Aufnahme des bei kommunalem Abwasser in der Regel kontinuierlichen Zulaufs zur Kläranlage (Trockenwetterabfluß) ist es erforderlich, ein Speicherbecken vorzuschalten, aus dem die meist mehreren, zeitversetzt betriebenen Reaktoren diskontinuierlich befüllt werden.

Bei diesem SBR-Verfahren, das sich grundsätzlich auch für den Betrieb kleinerer Einheiten eignet, ist nachteilig, daß sowohl für den Sauerstoffeintrag als auch zur Durchmischung eigene Geräte benötigt werden, die einerseits die Investititonskosten einer solchen Anlage in die Höhe treiben, andererseits aber auch gepflegt und gewartet werden müssen. Gemäß DE 44 43 019 C1 sind für den Sauerstoffeintrag Kreiselbelüfter und zusätzliche Begasungsmatten sowie zur Durchmischung ein Tauchmotorrührwerk vorgesehen.

Ferner ist es aus der DE 41 10 026 A1 bekannt, bei der Denitrifikation eine Durchmischung des Abwassers und das Ausgasen von Stickstoff durch Einblasen von sauerstoffarmer Luft zu erreichen. Dabei wird die im Reaktor befindliche Luft kontinuierlich im Kreislauf geführt. Der bei erstmaligem Anfahren der Anlage im Reaktor befindliche Sauerstoff wird schnell von den Mikroorganismen veratmet, so daß mit der Zeit ein sauerstoffabgemagerter Gasstrom entsteht, der die Denitrifikationsvorgänge im Inneren des Reaktors nicht beeinträchtigt. Dieser Gasstrom kann auch zur Reinigung von Tropfkörperelementen verwendet werden.

Vor diesem Hintergrund liegt der Erfindung die Aufgabe zugrunde, eine Möglichkeit zur weitergehenden Abwasserreinigung anzugeben, durch die sich auf einfache Art und Weise und mit geringst möglichen apparativen Mitteln die eingangs beschriebenen Voraussetzungen für die gewünschte Reinigungsleistung schaffen lassen.

Gemäß der Erfindung wird diese Aufgabe durch ein Verfahren mit den Merkmalen des Anspruchs 1 sowie eine Vorrichtung mit den Merkmalen des Anspruchs 6 gelöst.

Vorteilhafte Weiterbildungen ergeben sich aus den Unteransprüchen.

Der Grundgedanke der Erfindung besteht darin, während der Belüftungsphase den sauerstoffhaltigen Gasstrom in offenem Kreislauf zu führen, d.h. Luft aus der Atmosphäre anzusaugen und in das Abwasser einzublasen; nach Durchströmen des Abwassers entweicht die Luft wieder in die Atmosphäre. Während der Mischphase zur Denitrifikation wird der Reaktor verschlossen und das im Reaktor befindliche Gas in geschlossenem Kreislauf geführt, d.h. es tritt kein neues Gas von außen hinzu. Dabei wird der in der eingeschlossenen Luft enthaltene Sauerstoff durch die im Abwasser lebenden Mikroorganismen "verstoffwechselt", so daß sich nach kurzer Zeit in dem Gasstrom eine außerordentlich niedrige Sauerstoffkonzentration einstellt, die ein Durchmischen des Abwassers ohne weiteren Sauerstoffeintrag erlaubt. Mit dem erfindungsgemäßen Verfahren läßt sich also auf kostengünstige Weise ein inertes Gas erzeugen, das für einen nachfolgenden Verfahrensschritt benötigt wird.

Der Gedanke, auf diese Weise einen "biochemisch inerten" Luftblasenstrom zu erzeugen, der zum Zwecke der Turbulenzerzeugung in der Abwasserbehandlung eingesetzt werden kann, ist zwar bekannt (DE 41 10 026 A1). Da erfindungsgemäß aber sowohl das Belüften als auch das Durchmischen mit Hilfe eines Gasstroms erfolgt, kann hierzu die gleiche gerätemäßige Ausstattung verwendet werden; es lassen sich somit zwei aufeinanderfolgende Verfahrensschritte mit ein und denselben Geräten durchführen. Der Wechsel zwischen Belüftungs- und Denitrifikationsphase läßt sich dabei auf besonders einfache Weise bewerkstelligen, indem einfach mit Hilfe eines Steuerorgans, z.B. eines Mehrwegeventils, die Ansaugluft einmal aus der Atmosphäre und dann wiederum aus dem Inneren des Reaktorbehälters entnommen wird.

Die Erfindung wird nachstehend anhand eines in der Zeichnung dargestellten Ausführungsbeispiels erläutert. Es zeigen
- Fig. 1: eine schematische Darstellung einer erfindungsgemäßen Abwasserreinigungsanlage während der Belüftungsphase und
- Fig. 2: dieselbe Anlage während der Denitrifikationsphase.

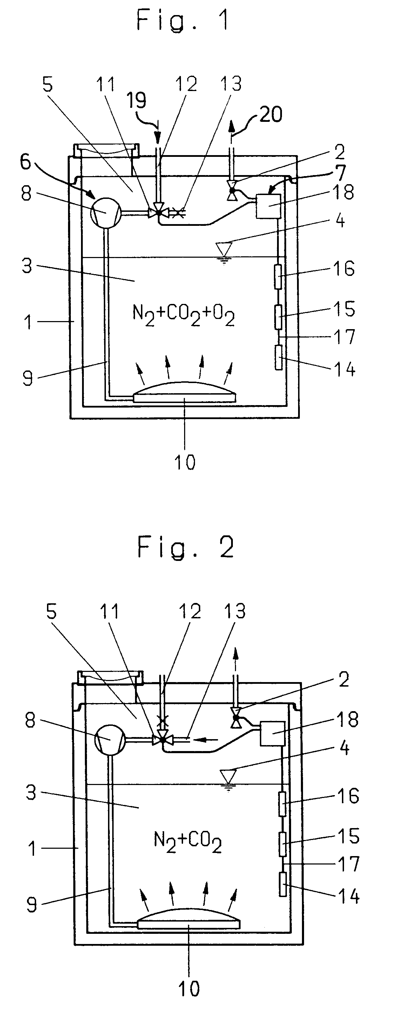

Die Fig. 1 und 2 zeigen in schematischer Weise das erfindungsgemäße Verfahren anhand eines Reaktorbehälters zur Abwasserreinigung während der Belüftungs- und Denitrifikationsphase.

Das Behandlungsbecken besteht aus einem gasdicht abschließbaren Behälter 1. Ein Auslaßventil 2 im oberen Bereich des Behälters 1 ermöglicht den Ausgleich von Druckunterschieden zwischen dem Behälterinneren und der Behälterumgebung, wie sie hauptsächlich während des Befüllens des Behälters 1 mit Abwasser 3 oder während der Belüftungsphase auftreten. Der Behälter 1 ist mit dem zu reinigenden Abwasser 3 bis zu einer maximalen Füllhöhe 4 gefüllt. Der darüberliegende Bereich 5 bleibt frei von Flüssigkeit und dient zur teilweisen Aufnahme der gerätemäßigen Ausstattung sowie als Auffangzone für aufsteigendes Gas.

Der Behälter 1 ist mit einem Belüftungssystem 6 und einem Meß- und Regelsystem 7 ausgestattet. Das Belüftungssystem 6 besteht aus einem Kompressor 8 im oberen Bereich 5 des Behälters 1, der über eine Druckleitung 9 mit einem in Bodennähe des Behälters 1 angeordneten Gasstromverteiler 10 verbunden ist. Weiter führt zu dem Kompressor 8 ein System von Ansaugleitungen. Im Mittelpunkt dieses Systems steht ein Mehrwegeventil 11, das auf der einen Seite mit den Ansaugleitungen 12 und 13 verbunden ist, von denen die mit 12 bezeichnete Leitung aus dem Behälter 1 herausführt und die andere, mit 13 bezeichnete Leitung, im oberen flüssigkeitsfreien Bereich 5 des Behälters 1 endet. Auf der gegenüberliegenden Seite ist dieses Ventil 11 mit dem Kompressor 8 verbunden. Das Mehrwegeventil 11 ermöglicht ein einfaches Hin- und Herschalten zwischen den Ansaugleitungen 12 und 13.

Die Meß- und Regeleinrichtung 7 besteht aus im Abwasser 3 angeordneten Meßsonden 14, 15, 16, die über Kabel 17 mit einer Steuereinheit 18 verbunden sind, die wiederum Steuerimpulse an das Mehrwegeventil 11 und an das Auslaßventil 2 übermitteln kann.

Bei der Durchführung des erfindungsgemäßen Verfahrens wird das im Behälter 1 befindliche Abwasser 3 zunächst in einer Belüftungsphase mit sauerstoffhaltiger Luft aus der Behälterumgebung, also der Atmosphäre, begast. Dazu öffnet das Mehrwegeventil 11 den Durchlaß zur Ansaugleitung 12 und sperrt gleichzeitig den Durchlaß zur Ansaugleitung 13 (Fig. 1). Der Kompressor 8 saugt nun Luft aus der Atmosphäre an (Pfeil 19) und bläst diese über die Druckleitung 9 und den Gasstromverteiler 10 in das Abwasser ein. Dabei teilt der Gasstromverteiler 10 die Luft in viele kleine Luftblasen, so daß ein möglichst großer Anteil des in der Luft enthaltenen Sauerstoffs im Abwasser 3 in Lösung geht. Dieser Sauerstoff wird zum Teil von Mikroorganismen bei der Umsetzung organischer Substanzen zu CO₂ und H₂O veratmet, zu einem anderen Teil aber auch von nitrifizierenden Bakterien zur Umsetzung von im Abwasser 3 befindlichen Ammoniumverbindungen zu Nitrit und Nitrat benötigt. Ein Druckausgleich kann über das Auslaßventil 2 erfolgen (Pfeil 20).

Die Dauer der Belüftungsphase kann anhand von Erfahrungswerten zeitabhängig gesteuert werden. Bessere Reinigungsleistungen lassen sich aber erzielen, wenn die Belüftungsdauer an den bereits erfolgten Umsetzungsgrad der im Abwasser 3 vorhandenen Substanzen gekoppelt ist. Zu diesem Zweck werden mittels der Sonden 14, 15, 16 laufend die Konzentrationen von NO₃, NH₄ und O₂ gemessen. Erst bei Erreichen der gewünschten Grenzwerte wird die Belüftungsphase beendet, wobei die Steuereinheit 18 das Auslaßventil 2 schließt und zwischen den Ansaugleitungen 12 und 13 des Kompressors 8 umschaltet, d.h. den Durchlaß zur nach außen führenden Ansaugleitung 12 sperrt und den zur Leitung 13 öffnet. Dadurch wird der Behälter 1 gasdicht abgeschlossen (Fig. 2).

Die zur Denitrifikation erforderliche Durchmischung des Abwassers 3 erfolgt weiterhin durch den Gasstrom. Der die Denitrifikation beeinträchtigende Sauerstoff ist anfangs noch im Gasstrom vorhanden, durch die geschlossene Kreislaufführung sinkt dessen Konzentration aber schon nach kurzer Zeit ab, da er von Mikroorganismen veratmet wird. Auf diese Weise entsteht ein sauerstoffabgemagerter Gasstrom, der die Funktion des Durchmischens des Abwassers erfüllt, ohne weiteren Sauerstoff in das Abwasser 3 einzutragen. Unter den nun anaeroben Bedingungen findet in an sich bekannter Weise der Umsetzungsprozeß von Nitrat in Stickstoff statt.

Auch die Dauer der Denitrifikationsphase kann zeitabhängig gesteuert sein. Wie schon im Falle der Belüftungsphase beschrieben, bietet sich vorteilhafterweise eine Steuerung in Abhängigkeit der Schadstoffkonzentrationen an.

Das erfindungsgemäße Verfahren eignet sich zwar in besonderer Weise zur Anwendung bei dem SBR-Verfahren, bei dem die Reinigung des Abwassers nicht kontinuierlich, sondern chargenweise in einem Reaktionsbehälter erfolgt. Es läßt sich aber auch allgemein zur Stickstoffelimination bei Kläranlagen anwenden. Dafür braucht lediglich ein erfindungsgemäß ausgebildeter Behälter nach dem Belebungsbecken der Nachklärung vorgeschaltet zu werden.

## Patentansprüche

1. Verfahren zur Behandlung von Abwasser im Wege der sequentiellen biologischen Reinigung (SBR-Verfahren) durch Mikroorganismen in einem Reaktionsbehälter (1) mit Füll-, Belüftungs- und Mischphasen, bei dem in der Belüftungsphase über ein Belüftungssystem (6) Luft aus der Atmosphäre in das Abwasser eingeblasen, danach der Behälter (1) luftdicht verschlossen und in der darauffolgenden Mischphase die im Reaktionsbehälter (1) eingeschlossene Luft zur Durchmischung des Abwassers unter anaeroben Bedingungen in einem geschlossenen Kreislauf geführt wird.

2. Verfahren nach Anspruch 1, dadurch gekennzeichnet, daß sowohl für die Belüftungs-, als auch die Mischphase dasselbe Belüftungssystem verwendet wird.

3. Verfahren nach Anspruch 1 oder 2, dadurch gekennzeichnet, daß der Wechsel zwischen Belüftungs- und Mischphase durch Umschalten eines Steuerorgans erfolgt, so daß im einen Fall Luft aus der Atmosphäre und im anderen Fall Luft aus dem Innenraum des geschlossenen Reaktionsbehälters angesaugt und in das Abwasser eingeblasen wird.

4. Verfahren nach Anspruch 3, dadurch gekennzeichnet, daß das Umschalten zwischen Belüftungs- und Mischphase in Abhängigkeit von der jeweiligen Behandlungsdauer geschieht.

5. Verfahren nach Anspruch 3, dadurch gekennzeichnet, daß das Umschalten zwischen Belüftungs- und Mischphase in Abhängigkeit von den NO₃-, NH₄- und O₂-Konzentrationen im Abwasser erfolgt.

6. Vorrichtung zur Durchführung des Verfahrens nach Anspruch 1, bestehend aus einem luftdicht verschließbaren und mit Abwasser füllbaren Reaktionsbehälter (1), in dem zum Durchmischen des Abwassers ein Begasungssystem angeordnet ist, durch das ein Gas angesaugt und in das Abwasser geblasen wird, wobei der Gasstrom während der Mischphase in einem geschlossenen Kreislauf geführt wird, dadurch gekennzeichnet, daß das Begasungssystem (6) Mittel aufweist, die durch Umschalten ein Ansaugen der Luft aus der Atmosphäre während der Belüftungsphase erlauben, d.h. der Gasstrom im offenen Kreislauf geführt wird.

7. Vorrichtung nach Anspruch 6, dadurch gekennzeichnet, daß die Mittel zum Umschalten zwischen geschlossener und offener Kreislaufführung aus einem Mehrwegeventil (11) bestehen.

8. Vorrichtung nach Anspruch 7, dadurch gekennzeichnet, daß zur Steuerung des Umschaltvorgangs Meßsonden (14, 15, 16) zur Messung der NO₃, NH₄ und O₂-Konzentrationen im Reaktionsbehälter (1) angeordnet sind.
